# EUROPEAN PATENT APPLICATION

(11) **EP 4 811 611 A1**
(43) Date of publication of application: **23.09.2026**
(21) Application number: 24952076.8
(22) Date of filing: 22.08.2024
(51) Int. Cl.: H02K 1/276, H02K 1/28, H02K 21/14

(54) **ROTOR ASSEMBLY AND MAGNET-INSERTED MOTOR HAVING SAME**

(71) Applicant: LG Electronics Inc., Yeongdeungpo-gu Seoul 07336 (KR)
(72) Inventor: JANG, Daekyu, Seoul 08592 (KR); REU, Jinwook, Seoul 08592 (KR); YU, Kyungmo, Seoul 08592 (KR); CHOI, Hyeonnyeong, Seoul 08592 (KR); HA, Kyungho, Seoul 08592 (KR)
(74) Representative: Vossius & Partner Patentanwälte Rechtsanwälte mbB
(86) International application number: PCT/KR2024/012560
(87) International publication number: WO 2026/042914

(57) **Abstract**

The present invention provides a rotor assembly and a magnet-inserted motor having same, the rotor assembly comprising a rotor core and permanent magnets, wherein the rotor core includes first rotor segments and second rotor segments, a first magnet accommodation part has outer diameter bridges provided in the circumferential direction and a second magnet accommodation part has openings, the first and second magnet accommodation parts are each provided with two magnet-arranged parts, an inner bridge is provided between the two magnet-arranged parts in the radial direction in the second magnet accommodation part, no inner bridge is provided between the two magnet-arranged parts in the first magnet accommodation part and an air gap is formed therebetween, and the plurality of first and second rotor segments are provided so as to be alternately stacked on each other.

## Description

### Technical Field

The disclosure relates to a rotor assembly and a magnet-inserted motor including the same.

### Background Art

Generally, a motor transfers the rotational force of a rotor to a rotating shaft, and the rotating shaft drives a load. For example, the rotating shaft may be connected to a drum of a washing machine to drive the drum, and may be connected to a fan of an outdoor unit of an air conditioner such that the fan is driven to exhaust heat to a required space.

In such a motor, the rotor rotates by electromagnetic interaction with a stator. To this end, a coil is wound on the stator, and as a current is applied to the coil, the rotor rotates with respect to the stator.

Motors to which permanent magnets are applied are classified into surface mounted permanent magnet (SPM) type motors in which magnets are attached to the surface of a rotor and interior permanent magnet (IPM) type motors in which magnets are inserted.

The SPM type is advantageous in terms of vibration and noise of the motor, but has problems in that manufacturing is difficult and costs increase because an adhesive or an additional fixing structure is used to fix the magnets.

On the other hand, the IPM type is easy to be manufactured by inserting magnets and is advantageous for improving motor efficiency by using both magnetic torque and reluctance torque. An IPM rotor core has a structure including slots for magnet insertion and an outer diameter bridge connecting between the magnet slots near the outer diameter of the rotor. The outer diameter bridge is formed to connect a pair of V-shaped magnet slots to another adjacent pair of V-shaped magnet slots. The outer diameter bridge is an advantageous structure for supporting magnets that receive force in a radial direction due to centrifugal force, but has a problem of hindering motor efficiency due to generation of leakage magnetic flux.

Patent Document 1 (US 2023-0170746, published on June 1, 2023) discloses an IPM type rotor in which V-shaped and 2-layer magnets are inserted into the rotor. In order to improve the performance of the motor, an outer diameter bridge on a rotor outer diameter side and an inner bridge of a magnet insertion part are removed throughout the stacked rotor, and the magnets and a core are fixed by filling the removed regions of the outer diameter bridge and the inner bridge with a resin material. The inner bridge is formed to connect each slot in a pair of V-shaped magnet slots. In addition, in Patent Document 1, a ring-type structure is installed on the rotor outer diameter to fix the entire rotor outer diameter.

In Patent Document 1, there is a problem that performance is degraded due to an increase in air gap resulting from the addition of the rotor outer diameter side structure, and there are limitations, such as the need for material suitability verification to apply to a motor of a compressor due to the use of the resin material for fixing the magnets and the core.

In addition, Patent Document 1 has a problem that production costs rise as the rotor outer diameter side structure and an assembly process are added. Additionally, the rotor core is in a separated form in which separated laminations are stacked, so there was a problem that a jig or a process for positioning each separated lamination was added when assembling the rotor core.

In addition, in Patent Document 1, as the outer diameter bridge on the rotor outer diameter side and the inner bridge of the magnet insertion part are removed throughout the stacked rotor, it was disadvantageous to secure the rigidity of the rotor structure during high-speed rotation. Specifically, there was a problem that the divided rotor core and magnets scattered due to centrifugal force during rotation.

Patent Document 2 (JP 2021-548893, published on September 18, 2020) discloses an IPM type rotor in which V-shaped and 1-layer magnets are inserted into a rotor. In order to increase the performance of the motor, a bridge on the outer side of the rotor was removed throughout the stacked rotor. To secure reliability by removing the outer diameter bridge, the magnets are fixed to a core using an adhesive, and protrusions are applied to the bridge-removed portions at both ends of the magnets. In addition, to secure the reliability of the rotor structure, the pair of V-shaped magnet slots are connected by an inner bridge formed to connect each slot.

Patent Document 2 had a disadvantage for securing the rigidity of the rotor structure as the outer diameter bridge was removed from the entire stacked rotor.

In addition, Patent Document 2 had a problem that motor performance was degraded due to leakage magnetic flux as the bridge between the magnets was applied to the entire stacked rotor.

In addition, Patent Document 2 used an adhesive for fixing the magnets, which was disadvantageous for application to a compressor and caused a problem of increasing rotor production costs.

In addition, Patent Document 2 had a problem that the effect of the V-type magnet shape, in which back electromotive force rises due to magnetic flux concentration, could not be fully brought about as a specific shape was applied to the core connection portion between magnets.

Patent Document 3 (CN 2022-11370964, published on November 3, 2022) discloses an IPM type rotor in which V-shaped magnets are inserted into a rotor. In order to increase the performance of the motor, a bridge on the outer side of the rotor was removed throughout the stacked rotor. In addition, to secure the reliability of the rotor structure, a core between magnets of one pole is connected by a bridge, and the thickness H of the bridge is mw^2r/y (m: rotor mass, w: maximum rotational angular velocity, r: distance between rotor center/magnet slots, y: maximum allowable tension of core). In addition, in Patent Document 3, protrusions were applied to the bridge-removed portions at both ends of the magnets to prevent magnet separation during high-speed rotation, and an interval L between the protrusions is h/3 ≤ L ≤ 2h/3.

Patent Document 3 had a disadvantageous point in securing the rigidity of the rotor structure as the outer diameter bridge was removed entirely from the stacked rotor. In addition, the magnet bridge was applied to the entire rotor stack, so there was a problem that the performance of the motor was degraded due to leakage magnetic flux. In addition, there was a problem that the dimensions of H and L might result in dimensions that cannot be manufactured depending on the operating conditions and specifications of the motor.

Therefore, there is a demand for development of a structure in which a ring-type structure is not installed on the outer diameter of a rotor, so that an air gap does not increase and separate assembly costs are not additionally required.

In addition, there is a demand for an arrangement in which an outer diameter bridge and an inner bridge are applied to a rotor assembly to suppress degradation of motor performance due to reduction of leakage magnetic fluxwhile securing the structural rigidity of the rotor.

### Disclosure of Invention

### Technical Problem

The disclosure has been made to solve the above problems, and a first aspect of the disclosure is to provide a rotor assembly having a structure advantageous for securing structural rigidity of a rotor, and a motor including the same.

A second aspect of the disclosure is to provide a rotor assembly having a structure capable of securing the performance of a motor by reducing leakage magnetic flux, and a motor including the same.

Particularly, an aspect of the disclosure is to provide a rotor assembly having a structure advantageous for securing structural rigidity of a rotor while securing motor performance due to reduction of leakage magnetic flux by alternately removing a bridge of a rotor outer diameter and ab ridge of a magnet insertion space in a stacked rotor, and a motor including the same.

A third aspect of the disclosure is to provide a rotor assembly having a structure that does not increase an air gap because there is no ring-type structure on an outer diameter of a rotor, and a motor including the same.

A fourth aspect of the disclosure is to provide a rotor assembly having a structure that does not increase rotor production costs and prevents degradation of motor performance due to welding, and a motor including the same.

### Solution to Problem

To solve the above problems, a rotor assembly according to the disclosure includes: a rotor core including therein a plurality of magnet accommodating parts spaced apart along a circumferential direction; and permanent magnets inserted into the magnet accommodating parts, wherein the rotor core includes: a first rotor segment including a first magnet accommodating part; and a second rotor segment stacked on the first rotor segment and including a second magnet accommodating part communicating with the first magnet accommodating part, wherein an outer diameter bridge is provided on one side of the first magnet accommodating part in the circumferential direction so as not to be exposed toward an outer circumference of the rotor core, an opening is provided on one side of the second magnet accommodating part so as to be exposed toward the outer circumference of the rotor core, the first and second magnet accommodating parts are each formed as a plurality of pairs, each pair is provided with two magnet arrangement parts formed to be bent at a predetermined angle, an inner bridge is provided in a radial direction between the two magnet placement parts in each pair of the second magnet accommodating parts, an inner bridge is not provided and an air gap is formed between the two magnet arrangement parts in each pair of the first magnet accommodating parts, and the first and second rotor segments are each provided in plurality and are alternately stacked on each other.

Accordingly, by the alternately stacked structure of the first rotor segment, whose outer rigidity is reinforced by the outer diameter bridge, and the second rotor segment, which does not include the outer diameter bridge so that leakage magnetic flux is reduced and back electromotive force is increased, performance can be secured according to the reduction of the leakage magnetic flux while securing reliability according to the reinforcement of the outer rigidity. For example, the permanent magnets can be prevented from scattering due to centrifugal force during rotation of the rotor core.

In addition, in the second magnet accommodating part, as the inner bridge is disposed between the two magnet arrangement parts, it is possible to resolve the degradation of structural reliability, which is a disadvantage of an outer diameter bridgeless type rotor.

The one side of the first magnet accommodating part may be defined between a pair of the first magnet accommodating parts and another adjacent pair of the first magnet accommodating parts, and the one side of the second magnet accommodating part may be defined between a pair of the second magnet accommodating parts and another adjacent pair of the second magnet accommodating parts.

According to an example related to the disclosure, the magnet arrangement part of the second magnet accommodating part may include: a bent support portion formed by being bent to support an end portion of the magnet on one side to which the inner bridge is connected; and an inner air gap portion provided to space the inner bridge from the end portion of the magnet.

This can simultaneously secure performance according to the reduction of the leakage magnetic flux and reliability according to the reinforcement of rigidity at the inside of the magnet arrangement part.

The magnet arrangement part of the second magnet accommodating part may include an inner support portion supported by a long side of the magnet at an inner side, which is a center side of the second rotor segment, and an outer support part supported by the long side of the magnet at an outer circumferential side of the second rotor segment.

Preferably, the inner bridge may be formed such that both side parts bent toward the magnet arrangement part of the second magnet accommodating part are rounded.

By such a structure, deformation or damage of the inner bridge due to centrifugal force during high-speed rotation of the rotor assembly can be prevented.

The opening may be defined between a circumferential cutout end provided on a circumferential end portion of the second rotor segment forming the second magnet accommodating part and a radial cutout end provided on a radial end portion of the second rotor segment forming the second magnet accommodating part.

As the opening is provided between the circumferential cutout end portion and the radial cutout end portion, leakage magnetic flux is reduced and back electromotive force is increased, so that the performance of the motor can be improved compared to the related art technology.

Preferably, the outer diameter bridge may have a width in the radial direction that varies from one portion of the outer diameter bridge adjacent to the magnet to another portion.

For example, the outer diameter bridge may include an outer end support portion having a bent portion formed by bending an end portion of the first magnet accommodating part to support one side of the magnet.

The outer diameter bridge may further include an outer air gap forming portion connected to the outer end support portion and spaced apart from the end portion of the magnet to be able to form an air gap with the end of the magnet.

By the structure in which the first rotor segment is provided with the outer diameter bridge including the outer end support portion and the outer air gap forming part on the outer periphery, the outer rigidity of the rotor core is reinforced and reliability is improved.

Preferably, the outer air gap forming portion may have a smaller width than the outer end support portion.

For example, a width G of the outer end support portion may have a relationship with a width F of the outer air gap forming portion as shown in [Mathematical Formula 1] below.

$G \geq F * 1.05$

In [Mathematical Formula 1], G denotes the width of the outer end support portion, and F denotes the width of the outer air gap forming portion.

A total height of the first rotor segment may be 10% to 30% of a total height of the entire rotor core, and a total height of the second rotor segment may be 70% to 90% of the total height of the entire rotor core.

The reason why the ratio of the second rotor segment is higher than the ratio of the first rotor segment is that it is advantageous that the outer diameter bridge configures the minimum first rotor segment to prevent scattering of magnets, and the remaining region configures the second rotor segment to increase motor performance by reducing leakage magnetic flux. In addition, since the influence of the outer diameter bridge is greater than that of the inner bridge on the leakage magnetic flux, it is advantageous to make the ratio of the second rotor segment higher than the ratio of the first rotor segment.

Preferably, the first rotor segments may be disposed on upper end and lower end of the rotor core.

The first rotor segment may be provided in six stages in a spaced manner, the second rotor segment may be provided in five stages between the first rotor segments, and a ratio of total heights between the first rotor segment and the second rotor segment may be 27:73.

The first rotor segment may be provided in six stages in a spaced manner, and the second rotor segment may be provided in five stages between the first rotor segments; the first rotor segment may be provided in three stages in a spaced manner, and the second rotor segment may be provided in two stages between the first rotor segments; or the first rotor segment may be provided in five stages in a spaced manner, and the second rotor segment may be provided in four stages between the first rotor segments.

According to another example of the disclosure, a rotor assembly includes: a rotor core including therein a plurality of magnet accommodating parts spaced apart along a circumferential direction; and permanent magnets inserted into the magnet accommodating parts, wherein the rotor core includes: a first rotor segment including a first magnet accommodating part; and a second rotor segment stacked on the first rotor segment and including a second magnet accommodating part communicating with the first magnet accommodating part, wherein an outer diameter bridge is provided on one side of the first magnet accommodating part in the circumferential direction so as not to be exposed toward an outer circumference of the rotor core, an opening is provided on one side of the second magnet accommodating part so as to be exposed toward the outer circumference of the rotor core, the first and second magnet accommodating parts are each formed as a plurality of pairs, each pair is provided with two magnet arrangement parts formed to be bent at a predetermined angle, each pair of the second magnet accommodating part includes a communication bent part formed to be bent at a predetermined angle between the two magnet arrangement parts, and allowing the two magnet arrangement parts to communicate with each other, each pair of the first magnet accommodating part forms an air gap, without an inner bridge, between the two magnet arrangement parts, and the first and second rotor segments are each provided in a plurality and are alternately stacked on each other.

To solve another task of the disclosure, a magnet-inserted motor of the disclosure includes: a stator; the aforementioned rotor assembly rotatably provided inside the stator; and a rotating shaft inserted into the rotor core, wherein the rotor assembly is disposed such that outer circumferential surfaces of the first and second rotor segments face each other inside the stator to form an air gap.

Accordingly, the disclosure does not include a ring-type structure on the outer diameter of the rotor core, so that the air gap does not increase and additional separate assembly costs are not required.

According to an example related to the disclosure, the stator includes: a stator core provided with teeth extending in a radial direction; and a stator coil wound on the teeth, wherein the rotor assembly may be disposed such that outer peripheral surfaces of the first and second rotor segments face the inside of the teeth to form an air gap.

### Advantageous Effects of Invention

A motor according to the disclosure can increase motor performance compared to mass production by reducing leakage magnetic flux and increasing back electromotive force through the application of a bridgeless rotor type.

That is, by an alternately stacked structure of a first rotor segment, whose outer rigidity is reinforced by an outer diameter bridge, and a second rotor segment, which does not include the outer diameter bridge so that leakage magnetic flux is reduced and back electromotive force is increased, performance can be secured according to the reduction of the leakage magnetic flux while securing reliability according to the reinforcement of the outer rigidity.

The motor according to the disclosure can improve degradation of rotor structural rigidity by adding an inner bridge near a space between magnets.

The motor according to the disclosure can improve an increase in leakage magnetic flux by adding an inner bridge only to a rotor core without an outer diameter bridge, without adding the inner bridge to the entire rotor core.

In addition, the motor according to the disclosure can simultaneously secure motor performance and rotor structural rigidity under operating conditions by applying a structure without an outer diameter bridge, a combination of an optimal stacking ratio of individual sheets of an inner bridge core, and an alternate sheet stacking method.

### Brief Description of Drawings

FIG. 1 is a cross-sectional view of a motor according to the disclosure.
FIG. 2 is a perspective view of a rotor assembly.
FIG. 3 is a longitudinal sectional view showing one side of FIG. 2.
FIG. 4 is a longitudinal sectional view showing another side of FIG. 2.
FIG. 5 is a plan view showing a second rotor segment.
FIG. 6 is a plan view showing a first rotor segment.
FIG. 7 is a plan view showing a second rotor segment in which magnets are installed.
FIG. 8 is an enlarged view of a portion near an opening in FIG. 7.
FIG. 9 is an enlarged view of a portion near an inner bridge in FIG. 7.
FIG. 10 is a plan view showing a first rotor segment in which magnets are installed.
FIG. 11 is an enlarged view of a portion near an outer diameter bridge in FIG. 10.
FIG. 12 is an enlarged view of a left portion in FIG. 11.
FIG. 13 is a longitudinal sectional view showing an example of a rotor assembly formed in a total of 5 stages.
FIG. 14 is a longitudinal sectional view showing an example of a rotor assembly formed in a total of 7 stages.
FIG. 15 is a longitudinal sectional view showing an example of a rotor assembly formed in a total of 9 stages.
FIG. 16 is a perspective view showing a rotor assembly to which bar-shaped magnets are applied, which is another embodiment according to the disclosure.
FIG. 17 is a plan view showing a first rotor segment in which the magnets of FIG. 16 are installed.
FIG. 18 is an enlarged view of a portion near an outer diameter bridge in FIG. 17.
FIG. 19 is a plan view showing a second rotor segment in which the magnets of FIG. 16 are installed.
FIG. 20 is an enlarged view of a portion near an opening in FIG. 19.
FIG. 21 is a plan view showing a second rotor segment, which is yet another embodiment according to the disclosure.
FIG. 22 is a plan view showing the second rotor segment of FIG. 21 in which magnets are installed.
FIG. 23 is an enlarged view of a portion of FIG. 22.

### Mode for the Invention

Hereinafter, a rotor assembly and a magnet-inserted motor having the same according to an embodiment of the disclosure will be described in detail with reference to the accompanying drawings. In the following description, descriptions of some components may be omitted to clarify the features of the disclosure.

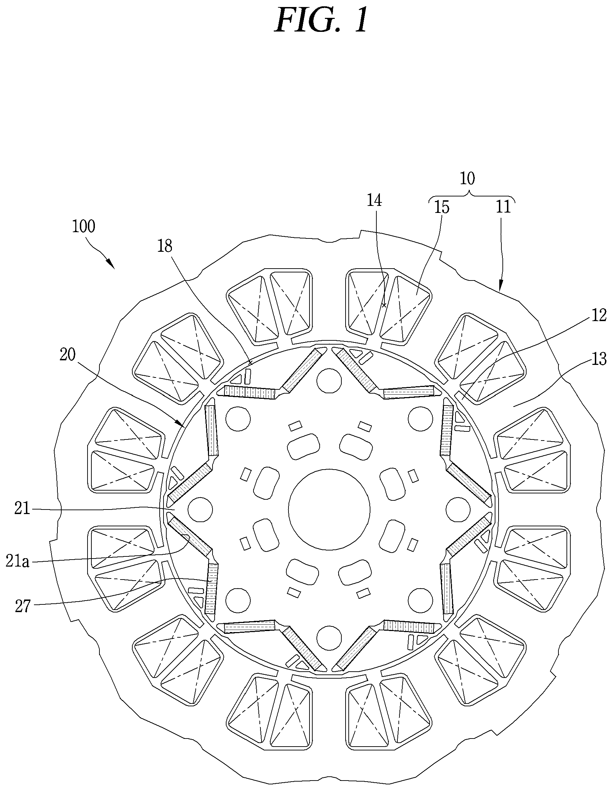

FIG. 1 is a cross-sectional view of a motor 100 according to the disclosure.

Referring to FIG. 1, the motor 100 according to the disclosure includes a stator 10, a rotor assembly 20, and a rotating shaft.

The stator 10 may include a stator core 11 and a stator coil 15 wound inside the stator core 11.

The stator core 11 may be formed by stacking and combining a plurality of electrical steel sheets. The stator core 11 may be formed in a hollow cylindrical shape.

On an inner circumference of the stator core 11, teeth extending in a radial direction may be provided. The teeth may be provided in plurality. Also, the teeth may be formed at equal intervals in a circumferential direction. A plurality of slots in which the stator coils 15 are disposed are formed between the plurality of teeth.

The stator coil 15 may be disposed between the plurality of slots and wound around the teeth. A pole shoe may be provided on an inner end of each tooth.

By allowing current to flow through the stator coil 15, a linkage flux can be formed in the stator core 11.

The rotor assembly 20 is rotatably provided inside the stator 10 with an air gap 18 between the stator 10 and the rotor assembly 20.

The rotating shaft is inserted into the rotor core.

The rotor assembly 20 is disposed such that outer circumferential surfaces of first and second rotor segments 23 and 26 face each other to form the air gap 18 inside the stator 10.

For example, the rotor assembly 20 may be arranged so that the outer circumferential surfaces of the first and second rotor segments 23 and 26 face each other to form the air gap 18 inside the teeth.

Accordingly, in the disclosure, a ring-type structure or the like is not provided on an outer diameter of a rotor core 21, so the air gap 18 does not increase, and no additional assembly cost is required.

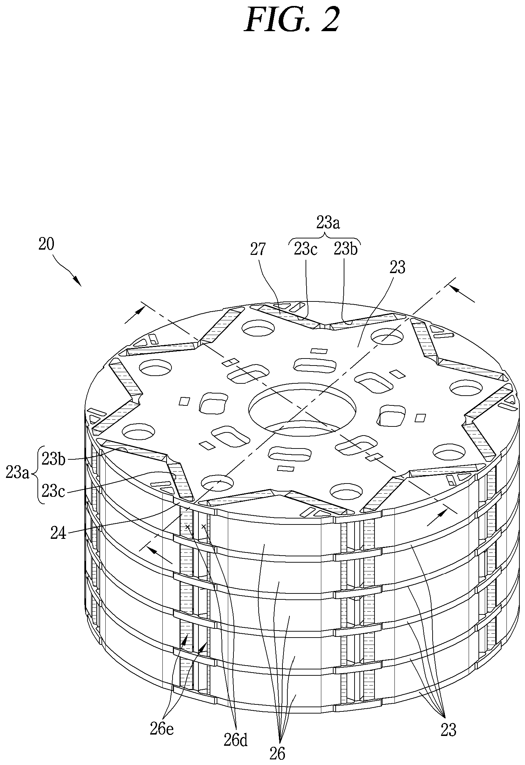

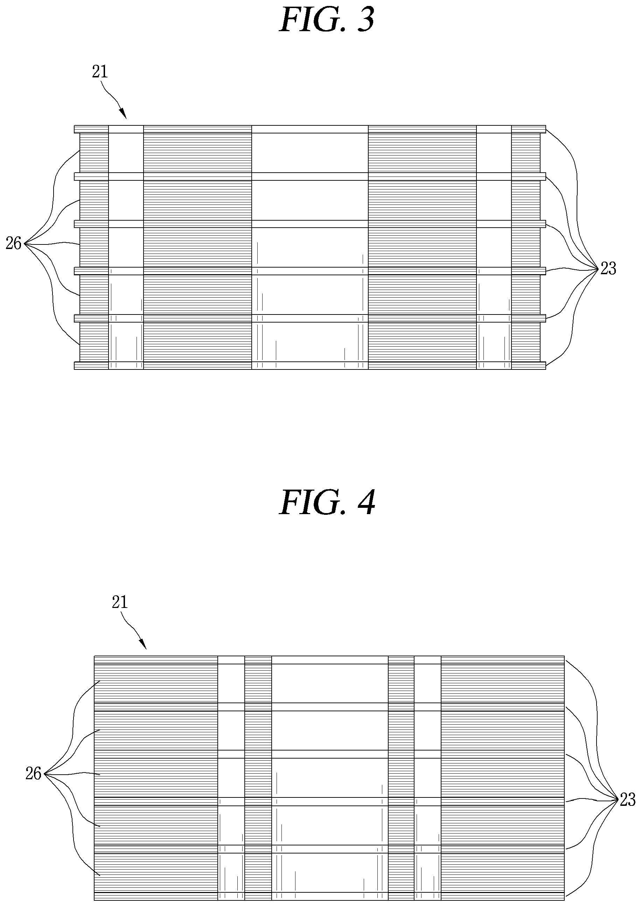

FIG. 2 is a perspective view of the rotor assembly 20. FIG. 3 is a longitudinal sectional view showing one side of FIG. 2, and FIG. 4 is a longitudinal sectional view showing another side of FIG. 2.

Hereinafter, the rotor assembly 20 will be described with reference to FIGS. 2 to 4.

The rotor assembly 20 according to the disclosure includes a rotor core 21 and permanent magnets 27.

The rotor core 21 has magnet accommodation parts 21a. The magnet accommodation part 21a is provided in plurality to be spaced apart along a circumferential direction inside the rotor core 21.

One side of the magnet accommodation part 21a may be disposed at an outer diameter portion of the rotor core 21, and the other side of the magnet accommodation part 21a may be disposed between outer side and center of the rotor core 21.

The permanent magnet 27 is inserted into the magnet accommodation part 21a. For example, the magnet accommodation part 21a may be formed in a V-shape, but is not limited thereto, and may also be formed in a bar-shape.

In the disclosure, the rotor assembly 20 having the V-shaped magnet accommodation part 21a is designated as a first embodiment, and the rotor assembly 20 having the bar-shaped magnet accommodation part 21a is designated as a second embodiment.

Hereinafter, the rotor assembly 20 according to the first embodiment will be described.

The rotor core 21 includes first and second rotor segments 23 and 26.

The first rotor segment 23 has a first magnet accommodation part 23a.

The second rotor segment 26 is stacked on the first rotor segment 23. The second rotor segment 26 has a second magnet accommodation part 26a.

An outer diameter bridge 24 is provided in the circumferential direction on one side of the first magnet accommodation part 23a so as not to be exposed toward an outer circumference of the rotor core 21.

An opening 26d is provided on one side of the second magnet accommodation part 26a so as to be exposed toward the outer circumference of the rotor core 21.

The first magnet accommodation part 23a is provided as a plurality of pairs, each pair including two magnet arrangement parts 23b and 23c formed to be bent at a predetermined angle.

The second magnet accommodation part 26a is also provided as a plurality of pairs, each pair including two magnet arrangement parts 26b and 26c formed to be bent at a predetermined angle.

In each pair of the second magnet accommodation parts 26a, an inner bridge 26f is provided in a radial direction between the two magnet arrangement parts 26b and 26c.

In each pair of the first magnet accommodation parts 23a, an inner bridge is not provided between the two magnet arrangement parts, and an air gap is formed.

Furthermore, the first and second rotor segments 23 and 26 are each provided in plurality to be alternately stacked on each other.

By an alternately stacked structure of the first rotor segment 23, of which outer stiffness is reinforced by the outer diameter bridge 24, and the second rotor segment 26, of which leakage magnetic flux is reduced and back electromotive force is increased due to exclusion of the outer diameter bridge 24, the performance of the rotor can be secured according to the reduction of the leaking magnetic flux while securing the reliability of the rotor according to the reinforcement of the outer stiffness.

That is, the disclosure overcomes the problem of reduced structural reliability, which is the disadvantage of the related art bridgeless type rotors, while applying a structural design increasing efficiency so as to be used as generally as an outer diameter bridge 24 rotor structure.

As an example, one side of the first magnet accommodation part 23a may be defined between the pair of the first magnet accommodation parts 23a and another adjacent pair of the first magnet accommodation parts 23a, and one side of the second magnet accommodation part 26a may be defined between the pair of the second magnet accommodation parts 26a and another adjacent pair of the second magnet accommodation parts 26a.

The first magnet accommodation part 23a and the second magnet accommodation part 26a are made to communicate with each other in the stacking direction of the first and second rotor segments 23 and 26, forming the magnet accommodation part 21a, in which the magnet 27 can be accommodated.

The first magnet accommodation part 23a and the second magnet accommodation part 26a are formed to substantially engage with each other, except for a portion where the inner bridge 26f is provided, thereby forming a structure which can support and accommodate the magnet 27.

Since the exposure of the magnet 27 and the magnet accommodation part 21a from the outer circumference is prevented by the outer diameter bridge 24, it may be understood that a closed part is defined. The outer diameter bridge 24 is provided on the outer circumference of the first rotor segment 23. The outer diameter bridge 24 may form one side wall of the first magnet accommodation part 23a.

On the other hand, the outer diameter bridge 24 is not provided in the opening 26d. That is, the second rotor segment 26 may be implemented in a form in which one side wall of the second magnet accommodation part 26a is cut. That is, when viewed from an outer side surface, the inside of the second magnet accommodation part 26a forms an open structure that is visible.

As such, in the rotor assembly 20 according to the disclosure, the outer diameter bridge 24 defining the outer side wall of the first magnet accommodation part 23a is provided on the outer circumference of the first rotor segment 23, and the outer diameter bridge 24 defining the outer side wall of the second magnet accommodation part 26a is not provided on the outer circumference of the second rotor segment 26.

Therefore, by the structure in which the outer diameter bridge 24 is not provided on the outer circumference of the second rotor segment 26, the leakage magnetic flux is reduced and the back electromotive force is increased, so the performance of the motor can be improved compared to the prior art.

In case that the rotor assembly 20 includes only the second rotor segment 26 without the outer diameter bridge 24, deformation of the outer diameter of the rotor assembly 20 may occur due to centrifugal force during high-speed operation, leading to weak structural reliability.

In particular, when the second rotor segments 26 are not connected as a single integrated body as a whole but have a stacked structure of individual sheets, deformation of the outer diameter of the second rotor segment 26 is more likely to occur.

By the structure in which the outer diameter bridge 24 is provided on the outer circumference of the first rotor segment 23, the outer stiffness is reinforced and the reliability is improved.

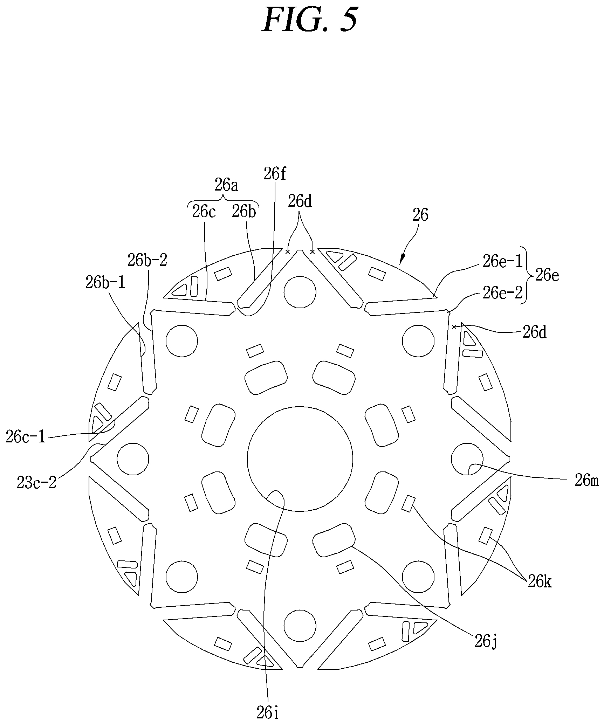

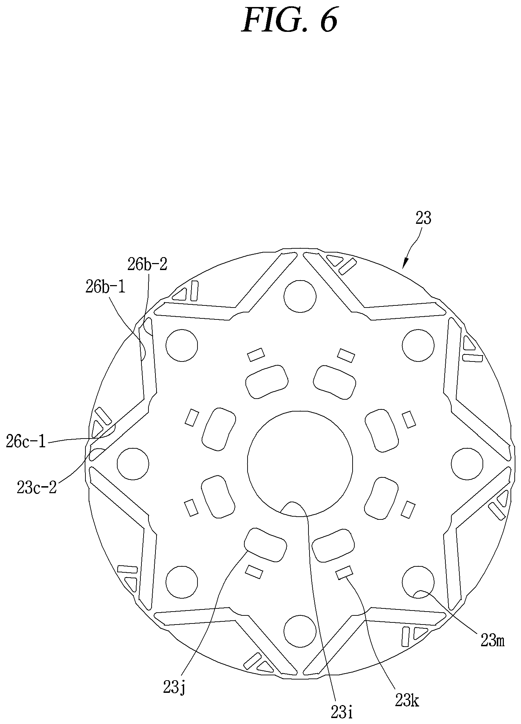

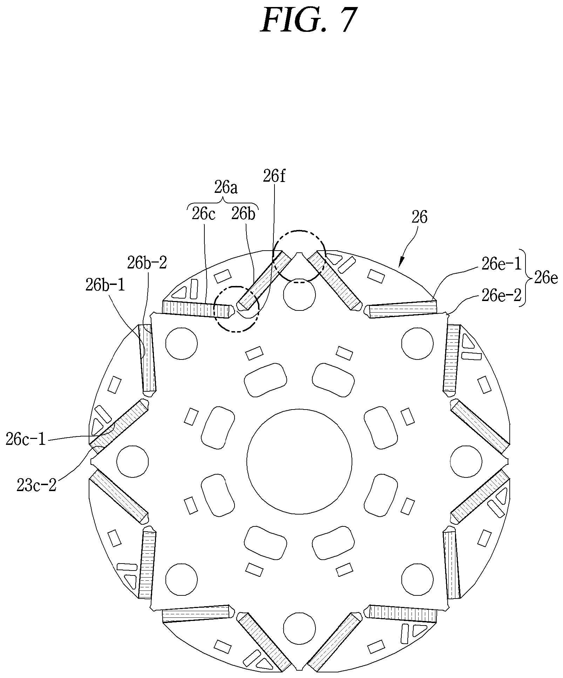

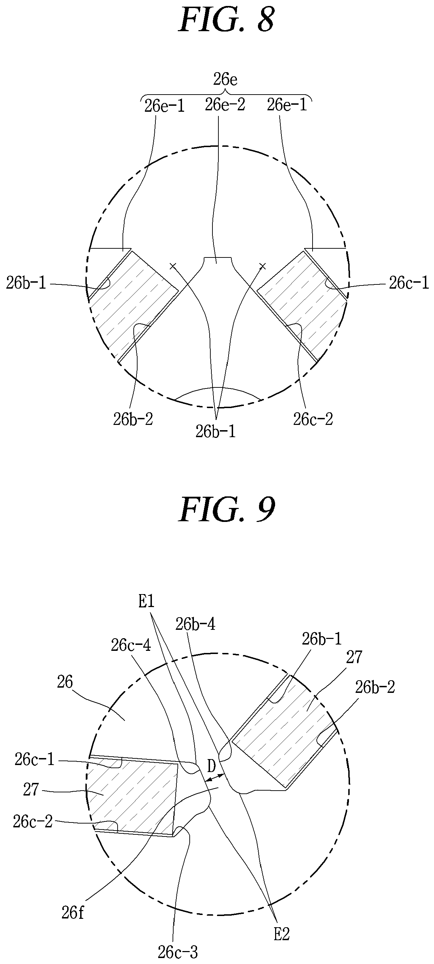

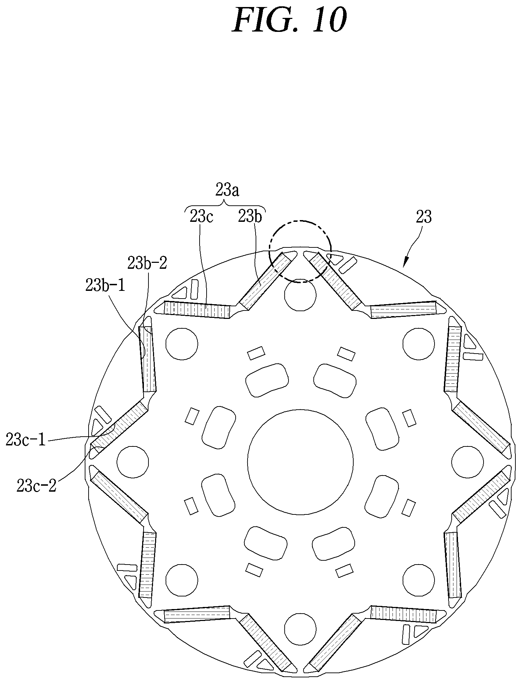

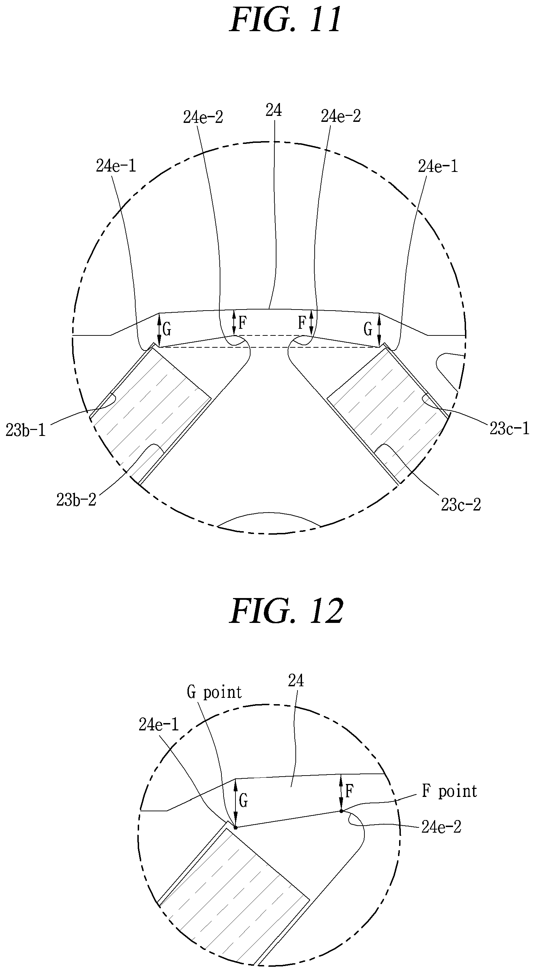

FIG. 5 is a plan view showing the second rotor segment 26, and FIG. 6 is a plan view showing the first rotor segment 23. FIG. 7 is a plan view showing the second rotor segment 26 in which a magnet 27 is installed, FIG. 8 is an enlarged view of a portion near an opening 26d in FIG. 7, and FIG. 9 is an enlarged view of a portion near an inner bridge 26f in FIG. 7. Also, FIG. 10 is a plan view showing the first rotor segment 23 in which the magnet 27 is installed, FIG. 11 is an enlarged view of a portion near an outer diameter bridge 24 in FIG. 10, and FIG. 12 is an enlarged view of a left portion in FIG. 11.

Hereinafter, the first and second rotor segments 23 and 26 will be described with reference to FIGS. 5 to 12.

The first rotor segment 23, as described above, includes the outer diameter bridge 24.

Also, the first magnet accommodating part 23a of the first rotor segment 23 may include a first magnet arrangement part 23b and a second magnet arrangement part 23c disposed in directions intersecting each other.

As shown in FIGS. 6 and 10, the first and second magnet arrangement parts 23b and 23c may be arranged in a V-shape forming an obtuse angle with each other.

Referring to FIGS. 6 and 10, an example is shown in which the first magnet arrangement part 23b and the second magnet arrangement part 23c are arranged in respective pairs between the outer diameter bridges 24, implemented as 8-pole magnets 27 arranged in a total of 8 pairs in the circumferential direction.

In each of the first and second magnet arrangement parts 23b and 23c of the pair, the magnets 27 having the same pole may be arranged.

The first magnet arrangement part 23b and the second magnet arrangement part 23c of each pair are arranged at a predetermined angle but may communicate with each other. For this, a communication-bent part formed to be bent at a predetermined angle may be provided between the first magnet arrangement part 23b and the second magnet arrangement part 23c of each pair.

That is, between the first magnet arrangement part 23b and the second magnet arrangement part 23c of each pair, that is, in the communication-bent portion, the inner bridge 26f is not provided.

The first magnet arrangement part 23b and the second magnet arrangement part 23c may be arranged adjacent to each other on one side of the first rotor segment 23 and the other side of the first rotor segment 23.

The one side of the first rotor segment 23 may be a portion disposed near the outer diameter of the first rotor segment 23, and the other side of the first rotor segment 23 may be a portion disposed between the outer diameter and the center of the first rotor segment 23.

The outer diameter bridge 24 may be provided on the one side of the first rotor segment 23, which is the portion disposed near the outer diameter of the first rotor segment 23.

A width in the radial direction of the outer diameter bridge 24 provided on one side of one magnet 27 may not be uniform. That is, the width may be variable from a portion adjacent to the magnet 27 toward the other portion.

A width on a portion of the outer diameter bridge 24 adjacent to the magnet 27 and a width on another portion may be thicknesses in a tangential direction of the rotor on the portion and the other portion, respectively.

As shown in FIGS. 11 and 12, the outer diameter bridge 24 is provided to have a width which gradually decreases from the portion adjacent to the magnet 27 to the other portion getting away from the magnet 27.

Due to this, during high-speed rotation of the rotor assembly 20, deformation and damage of the outer diameter bridge 24 region are prevented to additionally secure reliability, and at the same time, leakage of magnetic flux is suppressed to enable maintenance of motor efficiency.

The outer diameter bridge 24 may include, on the portion adjacent to the magnet 27, an outer end support portion 24e-1 that supports the magnet 27. The outer end support portion 24e-1 may include a bent portion formed such that an end of the magnet accommodating part 21a is bent to support an outer end of the magnet 27.

By the outer end support portion 24e-1, one side of the magnet 27 is supported, thereby securing structural reliability.

Also, on the other portion getting away from the magnet 27, the outer diameter bridge 24 may include an outer air gap forming portion 24e-2.

As the outer air gap forming portion 24e-2 has a smaller width than the outer end support portion 24e-1, the outer air gap 18 can become larger, which can further reduce the leakage magnetic flux.

A width G of the portion of the outer diameter bridge 24 or a width G of the outer end support portion 24e-1 may have a relationship as follows with a width F of the other portion of the outer diameter bridge 24 or a width F of the outer air gap forming portion 24e-2.

$G \geq F * 1.05$

In the Mathematical Formula 1, G denotes the width of the portion of the outer diameter bridge 24 or the width of the outer end support portion 24e-1, and F is the width of the other portion of the outer diameter bridge 24 or the width of the outer air gap forming part 24e-2.

According to Mathematical Formula 1, when F is 0.45 mm, G may be 0.4725 mm or more, and as an example, the G value may be 0.495 mm.

The first and second magnet arrangement parts 23b and 23c may include inner support portions 23b-2 and 23c-2 that is contacted and supported by a long side of the magnet 27 at an inner side, which is a center side of the first rotor segment 23, and outer support portions 23b-1 and 23c-1 that is contacted and supported by the long side of the magnet 27 at an outer circumferential side of the first rotor segment 23.

Meanwhile, the first and second rotor segments 23 and 26 may include rotating shaft coupling parts 23i and 26i into which the rotating shaft is inserted and coupled. The first and second rotor segments 23 and 26 may include a plurality of gas passages 23j and 26j through which refrigerant gas or the like can flow, and which are arranged spaced apart in the circumferential direction around the rotating shaft coupling parts 23i and 26i. In the first and second rotor segments 23 and 26, an example is shown in which a plurality of coupling holes 23m and 26m into which a casing, a plate, or the like can be coupled are spaced apart in the circumferential direction.

Also, the first and second rotor segments 23 and 26 may include coupling members 23k and 26k for stacking and coupling the first and second rotor segments 23 and 26 to each other. Although the structure of the coupling member is not clearly shown in the drawings, one side is cut and protruded, so a protruded part is inserted into a cut part of another member to form a coupled structure. As an example, the coupling members 23k and 26k may be implemented as a Mac structure. The coupling members 23k and 26k are provided in plurality and may be spaced apart in the circumferential direction.

Hereinafter, the second rotor segment 26 will be described.

As described above, the second rotor segment 26 does not include the outer diameter bridge 24.

That is, the opening 26d is formed on one side of the second rotor segment 26 where the magnet 27 is disposed.

By the opening 26d, a side portion of the magnet 27 inserted into the second magnet accommodating part 26a is exposed at the outer side of the second rotor segment 26.

Particularly, since the portion where the opening 26d is formed is not connected by an electrical steel sheet material in the circumferential direction, the leakage of magnetic flux generated from the magnet 27 can be prevented to the maximum.

For example, the opening 26d may be formed in a shape in which a portion where the outer circumference of the second rotor segment 26 and the second magnet accommodation part 26a are connected is cut. That is, the opening 26d may be exemplified as a cutout portion.

The opening 26d may be defined between a circumferential cut end 26e-1 provided on a circumferential end of the second rotor segment 26 forming the second magnet accommodation part 26a, and a radial cut end 26e-2 provided on a radial end of the second rotor segment 26 forming the second magnet accommodation part 26a.

Also, the second magnet accommodation part 26a of the second rotor segment 26 may include a third magnet arrangement part 26b and a fourth magnet arrangement part 26c disposed in directions crossing each other.

For example, referring to FIG. 8, different pairs of third and fourth magnet arrangement parts 26b and 26c are shown, and a circumferential cut end 26e-1 is provided at an end of the outer support portions 23b-1 and 23c-1 of the third magnet arrangement part 26b. An example is shown where a radial cut end 26e-2 is provided on the radial end of the second rotor segment 26 between different pairs of the third and fourth magnet arrangement parts 26b and 26c. The opening 26d is shown between the circumferential cut end 26e-1 and the radial cut end 26e-2.

An inner bridge 26f may be provided between a pair of the third magnet arrangement part 26b and the fourth magnet arrangement part 26c. The inner bridge 26f may be provided on an opposite side to the one side where the opening 26d is formed.

The inner bridge 26f must satisfy at least 0.4 mm or more to enable the application of mold manufacturing and to prevent leakage of magnetic flux to the maximum.

Also, the inner bridge 26f may be formed such that both side portions E1 and E2 bent toward the third and fourth magnet arrangement part 26b and 26c are rounded rather than forming a right angle, in order to prevent deformation or damage of the inner bridge 26f due to centrifugal force during high-speed rotation of the rotor assembly 20.

The third and fourth magnet arrangement parts 26b and 26c may include inner support portions 23b-2 and 23c-2 that is contacted and supported by a long side of the magnet 27 at an inner side, which is a center side of the second rotor segment 26, and outer support portions 23b-1 and 23c-1 that is contacted and supported by the long side of the magnet 27 at an outer circumferential side of the second rotor segment 26.

Also, referring to FIG. 9, the third and fourth magnet arrangement parts 26b and 26c of the second magnet accommodating part 26a may include a bent support portion 26c-3 formed by being bent to support an end portion of the magnet 27 on one side where the inner bridge 26f is connected; and inner gap portions 26c-4 and 26b-4 provided to space the end portion of the magnet 27 from the inner bridge 26f.

The bent support portion 26c-3 may be formed by being bent at the inner ends of the inner support portions 23b-2 and 23c-2 to support the inner side of the magnet 27.

The inner gap portions 26c-4 and 26b-4 may be provided between the inner bridge 26f and the inner end of the magnet 27. By the inner gap portions 26c-4 and 26b-4, leakage of magnetic flux at the inner end of the magnet 27 can be prevented.

FIG. 3 is a longitudinal sectional view showing one side of the rotor assembly 20 of FIG. 2, and FIG. 4 is a longitudinal sectional view showing another side of the rotor assembly 20 of FIG. 2.

Hereinafter, the stacking structure of the rotor assembly 20 will be described with reference to FIGS. 3 and 4.

As shown in FIGS. 3 and 4, the rotor assembly 20 according to the disclosure may be formed such that six first rotor segments 23 are stacked, and five second rotor segments 26 are stacked between the first rotor segments 23.

Also, each of the six first rotor segments 23 may be formed by stacking a plurality of individual steel sheets.

Similarly, each of the five second rotor segments 26 may be formed by stacking a plurality of individual steel sheets.

For example, in the disclosure, one first rotor segment 23 may be formed by stacking 5 or 6 individual steel sheets.

In FIGS. 3 and 4, the lowermost first rotor segment 23 includes 6 individual steel sheets stacked, and the other uppermost and four intermediate first rotor segments 23 are configured in a form where 5 individual steel sheets are stacked.

For example, a thickness of an individual steel sheet may be 0.35 mm.

A thickness of the first rotor segment 23 is determined by the multiplication of the thickness of the individual steel sheet and the number of stacked individual steel sheets.

Therefore, the thicknesses of each of the uppermost first rotor segment 23 and the four intermediate first rotor segments 23 is 1.75 mm. Also, the thickness of the lowermost first rotor segment 23 is 2.1 mm.

In the disclosure, the second rotor segment 26 may be formed by stacking 16 or 17 individual steel sheets.

In FIGS. 3 and 4, among the five second rotor segments 26, the uppermost second rotor segment 26 and the lowermost second rotor segment 26 are each formed by stacking 16 individual steel sheets, and the three second rotor segments 26 disposed between them may each be formed by stacking 17 individual steel sheets.

For example, a thickness of an individual steel sheet may be 0.35 mm.

A thickness of the second rotor segment 26 is determined by the multiplication of the thickness of the individual steel sheet and the number of stacked individual steel sheets.

Therefore, among the five second rotor segments 26, the thickness of each of the uppermost second rotor segment 26 and the lowermost second rotor segment 26 is 5.6 mm. Also, the thickness of each of the three second rotor segments 26 disposed between the uppermost and lowermost second rotor segments 26 may be 5.95 mm.

The total number of individual sheets of the first rotor segments 23 is 31, the total number of individual sheets of the second rotor segments 26 is 83, and the total number of individual sheets of the first and second rotor segments 23 and 26 is 114.

The total thickness of the first rotor segments 23 is 10.85 mm, the total thickness of the second rotor segments 26 is 29.05 mm, and the total thickness of the first and second rotor segments 23 and 26 is 39.9 mm.

In the disclosure, the total height of the first rotor segments 23 may be 10% to 30% of the total height of the entire rotor core 21, and the total height of the second rotor segments 26 may be 70% to 90% of the total height of the entire rotor core 21.

For example, the thickness of the first rotor segments 23 may be 27% relative to the total thickness of the first and second rotor segments 23 and 26. Also, the thickness of the second rotor segments 26 may be 73% relative to the total thickness of the first and second rotor segments 23 and 26.

In the disclosure, the total thickness of the second rotor segments 26 is formed to be larger than the total thickness of the first rotor segments 23, so that leakage flux is reduced and back-EMF is increased, whereby the performance of the motor can be improved.

Also, in the disclosure, the number (6) of stages of the first rotor segments 23 is arranged to be greater than the number (5) of stages of the second rotor segments 26, so that the outer stiffness can be reinforced and reliability can be improved.

Particularly, in the disclosure, the number (6) of stages of the first rotor segments 23 is arranged to be greater than 5 stages, so that the outer stiffness can reinforced and reliability can be secured.

Also, the uppermost and lowermost ends of the rotor core 21 of the rotor assembly 20 may include the first rotor segments 23.

The first rotor segments 23 may be greater in number than the second rotor segments 26.

Also, in the disclosure, an individual stage of the first rotor segment 23 has a thickness larger than 1 mm, so that assembly performance and structural reliability can be secured.

Also, in the disclosure, the first rotor segments 23 are disposed on the uppermost and lowermost ends of the rotor assembly 20, so that the outer stiffness can be reinforced and reliability can be improved.

Preferably, each of the first rotor segments 23 disposed on the uppermost and lowermost ends of the rotor assembly 20 has a thickness of at least 1.0 mm, so that deformation and damage of the second rotor segments 26 can be prevented when the rotor assembly 20 is assembled into a compressor, handled, and transported.

In this way, even if the stacking of the rotor core 21 of the motor 100, the thickness of individual core sheets, the number of poles, and the shape of the magnets 27 are changed, by stacking two types of individual core sheets, namely, - a core sheet to which the rotor outer diameter bridge 24 is applied and a core sheet where a bridge is added to the magnet accommodation part 21a of a core without the outer diameter bridge 24, it is possible to flexibly apply the rotor assembly by adjusting only the alternating ratio according to the required efficiency of the motor 100 or high-speed operation conditions.

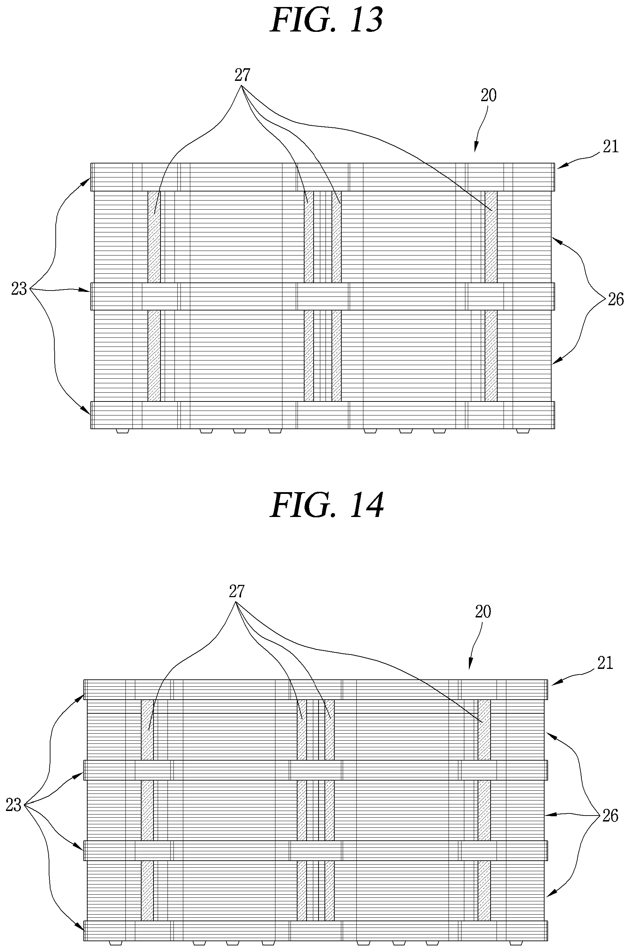

Hereinafter, with reference to FIGS. 13 to 15, other examples will be described in which the rotor assembly 20 is formed by combining different numbers of stacking stages and numbers of individual sheets of the first and second rotor segments 23 and 26.

FIG. 13 is a longitudinal sectional view showing an example of the rotor assembly 20 formed in a total of 5 stages.

As described above, the thickness of an individual steel sheet may be 0.35 mm, and the thickness of a rotor segment is determined by the multiplication of the thickness of the individual steel sheet and the number of individual steel sheets stacked.

The uppermost first rotor segment 23 may be formed by stacking 15 individual steel sheets, and the thickness of the uppermost first rotor segment 23 is 5.25 mm. The lowermost first rotor segment 23 may be formed by stacking 16 individual steel sheets, and the thickness of the lowermost first rotor segment 23 is 5.6 mm.

The intermediate first rotor segment 23 disposed between the uppermost and lowermost first rotor segments 23 may be formed by stacking 15 individual steel sheets, and the thickness of the intermediate first rotor segment 23 is 5.25 mm.

Meanwhile, in the 5-stage rotor assembly 20 of FIG. 13, two stages of the second rotor segments 26 may be disposed between the first rotor segments 23. An upper second rotor segment 26 may be formed by stacking 34 individual steel sheets, and the thickness of the upper second rotor segment 26 is 11.9 mm. A lower second rotor segment 26 may be formed by stacking 34 individual steel sheets, and the thickness of the lower second rotor segment 26 is 11.9 mm.

In the example of the 5-stage rotor assembly 20 of FIG. 13, the total number of individual sheets of the first rotor segments 23 is 46, the total number of individual sheets of the second rotor segments 26 is 68, and the total number of individual sheets of the first and second rotor segments 23 and 26 is 114.

The total thickness of the first rotor segments 23 is 16.1 mm, the total thickness of the second rotor segments 26 is 23.8 mm, and the total thickness of the first and second rotor segments 23 and 26 is 39.9 mm.

Compared to the previously described 11-stage rotor assembly 20 (FIGS. 3 and 4), the 5-stage rotor assembly 20 of FIG. 13 has a larger total thickness of the first rotor segments 23 and a smaller thickness of the second rotor segments 26, which can further improve structural reliability and lower performance to some extent.

FIG. 14 is a longitudinal sectional view showing an example of the rotor assembly 20 formed in a total of 7 stages.

As described above, the thickness of an individual steel sheet may be 0.35 mm, and the thickness of a rotor segment is determined by the multiplication of the thickness of the individual steel sheet and the number of individual steel sheets stacked.

The uppermost first rotor segment 23 may be formed by stacking 8 individual steel sheets, and the thickness of the uppermost first rotor segment 23 is 2.8 mm. The lowermost first rotor segment 23 may be formed by stacking 9 individual steel sheets, and the thickness of the lowermost first rotor segment 23 is 3.15 mm.

Two first rotor segments 23 disposed between the uppermost and lowermost first rotor segments 23 may each be formed by stacking 8 individual steel sheets, and each thickness is 2.8 mm.

Meanwhile, in the 7-stage rotor assembly 20 of FIG. 14, three stages of the second rotor segments 26 may be disposed between the first rotor segments 23. An upper second rotor segment 26 may be formed by stacking 27 individual steel sheets, and the thickness of the upper second rotor segment 26 is 9.45 mm. A lower second rotor segment 26 may be formed by stacking 27 individual steel sheets, and the thickness of the lower second rotor segment 26 is 9.45 mm. The second rotor segment 26 located in the middle may be similarly formed by stacking 27 steel sheets, and the thickness of an upper second rotor segment 26 is 9.45 mm.

In the example of the 7-stage rotor assembly 20 of FIG. 14, the total number of individual sheets of the first rotor segments 23 is 33, the total number of individual sheets of the second rotor segments 26 is 81, and the total number of individual sheets of the first and second rotor segments 23 and 26 is 114.

The total thickness of the first rotor segments 23 is 11.55 mm, the total thickness of the second rotor segments 26 is 28.35 mm, and the total thickness of the first and second rotor segments 23 and 26 is 39.9 mm.

Compared to the previously described 5-stage rotor assembly 20 (FIG. 13), the 7-stage rotor assembly 20 of FIG. 14 has a smaller total thickness of the first rotor segments 23 and a larger thickness of the second rotor segments 26, which may lower structural reliability but further improve performance.

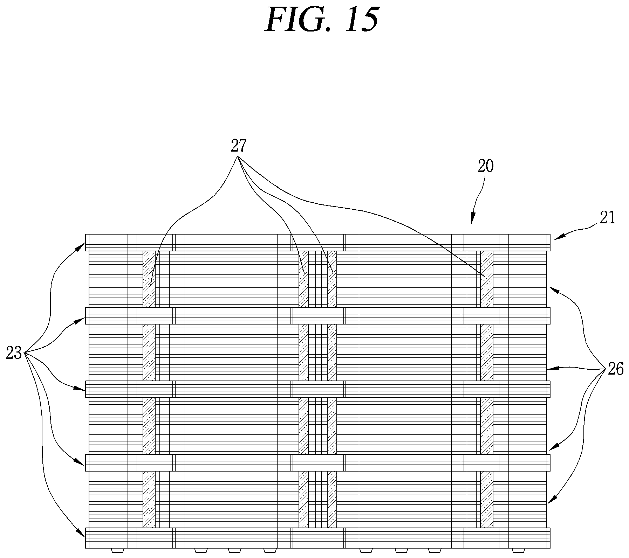

FIG. 15 is a longitudinal sectional view showing an example of the rotor assembly 20 formed in a total of 9 stages.

As described above, the thickness of an individual steel sheet may be 0.35 mm, and the thickness of a rotor segment is determined by the multiplication of the thickness of the individual steel sheet and the number of stacked individual steel sheets.

Except for the lowermost first rotor segment 23, the uppermost first rotor segment 23 and the intermediate first rotor segments 23 may each be formed by stacking 4 individual steel sheets, and each thickness is 1.4 mm. The lowermost first rotor segment 23 may be formed by stacking 5 individual steel sheets, and the thickness of the lowermost first rotor segment 23 is 1.75 mm.

Among the four second rotor segments 26 disposed between the uppermost and lowermost first rotor segments 23, three second rotor segments 26, excluding a lower second rotor segment 26, may each be formed by stacking 23 individual steel sheets, and each thickness is 8.05 mm.

Among the four second rotor segments 26, the lower second rotor segment 26 may be formed by stacking 24 individual steel sheets, and the thickness is 8.4 mm.

In the example of the 9-stage rotor assembly 20 of FIG. 15, the total number of individual sheets of the first rotor segments 23 is 21, the total number of individual sheets of the second rotor segments 26 is 93, and the total number of individual sheets of the first and second rotor segments 23 and 26 is 114.

The total thickness of the first rotor segments 23 is 7.35 mm, the total thickness of the second rotor segments 26 is 32.55 mm, and the total thickness of the first and second rotor segments 23 and 26 is 39.9 mm.

The 9-stage rotor assembly 20 of FIG. 15, compared to the previously described rotor assemblies 20, has a smaller total thickness of the first rotor segments 23 and a larger thickness of the second rotor segments 26, which may lower structural reliability but further improve performance.

In this way, even if the stacking of the rotor core 21 of the motor 100, the thickness of core individual sheets, the number of poles, and the shape of the magnets 27 are changed, by stacking two types of core individual pieces, namely, a core piece to which the rotor outer diameter bridge 24 is applied and a core piece where a bridge is added to the magnet accommodation part 21a of a core without the outer diameter bridge 24, it is possible to flexibly apply the rotor assembly by adjusting only the alternating ratio according to the required efficiency of the motor 100 or high-speed operation conditions.

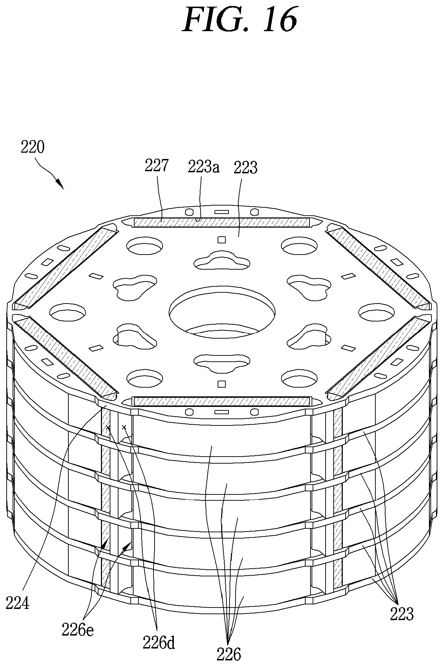

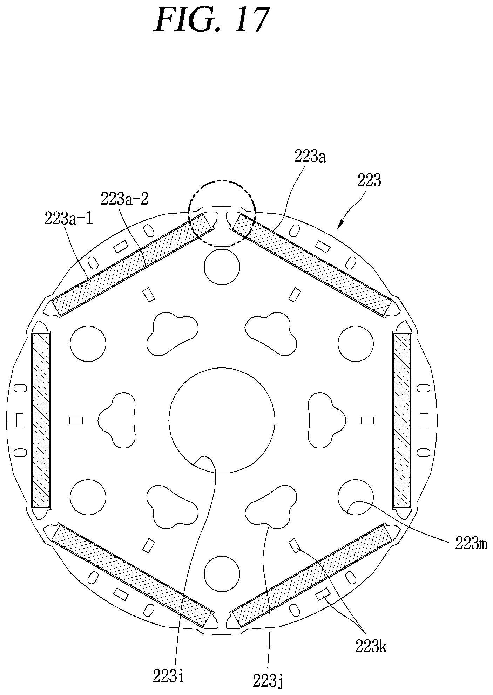

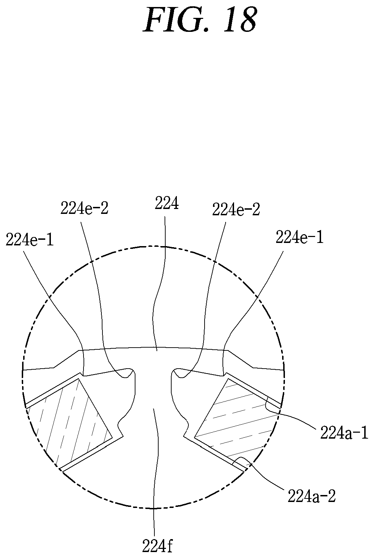

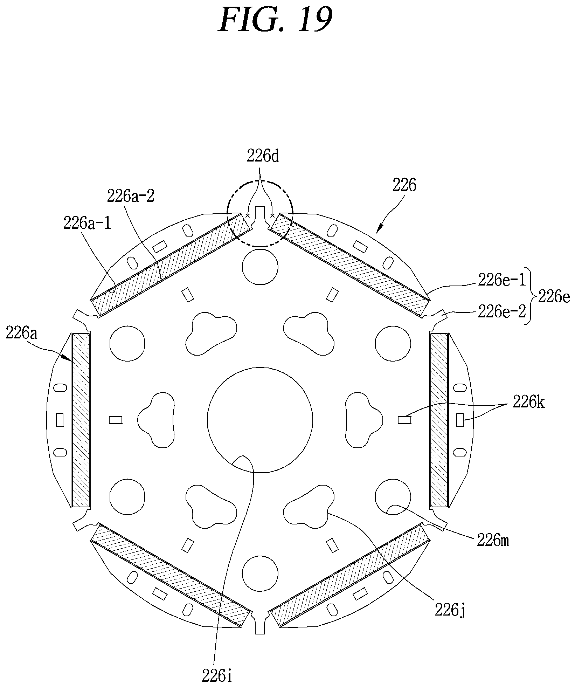

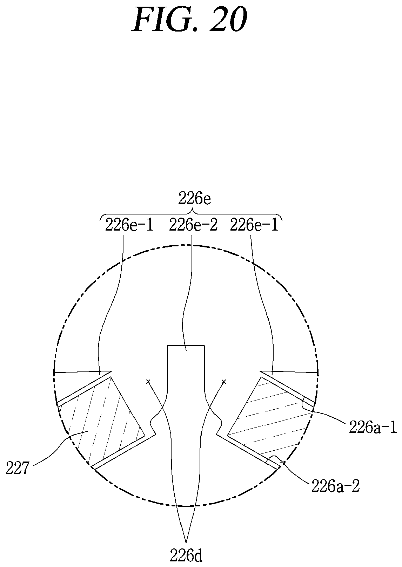

FIG. 16 is a perspective view showing a rotor assembly 220 to which bar-shaped magnets 227 are applied, which is a second embodiment according to the disclosure, and FIG. 17 is a plan view showing a first rotor segment 223 in which the magnets 227 of FIG. 16 are installed. Also, FIG. 18 is an enlarged view of a portion near the outer diameter bridge 224 of FIG. 17, and FIG. 19 is a plan view showing a second rotor segment 226 in which the magnets 227 of FIG. 16 are installed. Meanwhile, FIG. 20 is an enlarged view of a portion near an opening 226d in FIG. 19.

Hereinafter, the rotor assembly 220 according to the second embodiment having bar-shape type magnet accommodation parts 223a and 226a will be described with reference to FIGS. 16 to 20.

The rotor assembly 220 according to the disclosure includes a rotor core 221 and permanent magnets 227.

The rotor core 221 has magnet accommodation parts 223a and 226a. One side of the magnet accommodation parts 223a and 226a is disposed on an outer diameter portion. The other side of the magnet accommodation parts 223a and 226a is disposed between outer side and center of the rotor core 221.

The permanent magnets 227 are installed in the magnet accommodation parts 223a and 226a. The magnet accommodation parts 223a and 226a are formed in a bar shape, unlike the first embodiment.

The rotor core 221 includes first and second rotor segments 223 and 226.

The first rotor segment 223 includes a first magnet accommodating part 223a.

The second rotor segment 226 includes a second magnet accommodating part 226a.

An outer diameter bridge 224 is provided in the circumferential direction on one side of the first magnet accommodation part 223a so as not to be exposed toward an outer circumference of the rotor core 221.

An opening 226d is provided on one side of the second magnet accommodation part 226a so as to be exposed toward the outer circumference of the rotor core 221.

The first and second rotor segments 223 and 226 are each provided in plurality and are formed by being alternately stacked on each other.

The first and second magnet accommodation parts 223a and 226a may be formed to engage with each other in the stacking direction of the rotor core 221.

Since the magnet 227 and the magnet accommodation parts 223a and 226a are prevented from being exposed at the outer circumference by the outer diameter bridge 224, it may be understood that a closed part is defined. The outer diameter bridge 224 is provided on an outer circumference of the first rotor segment 223. The outer diameter bridge 224 may form one side wall of the first magnet accommodating part 223a.

On the other hand, the outer diameter bridge 224 is not provided at the opening 226d. That is, the second rotor segment 226 may be implemented in a form in which one side wall of the second magnet accommodating part 226a is cut away. That is, when viewed from an outer side surface, it forms an open structure where the magnet 227 provided inside the second magnet accommodating part 226a is visible.

As such, in the rotor assembly 220 according to the disclosure, the outer diameter bridge 224 defining an outer wall of the first magnet accommodating part 223a is provided on the outer circumference of the first rotor segment 223, and the outer diameter bridge 224 defining an outer wall of the second magnet accommodating part 226a is not provided on the outer circumference of the second rotor segment 226.

Therefore, due to the structure in which the outer diameter bridge 224 is not provided on the outer circumference of the second rotor segment 226, leakage magnetic flux is reduced and back electromotive force is increased, so that the performance of the motor can be improved compared to the related art technology.

Hereinafter, the description will focus on the bar-shaped magnet accommodating parts 223a and 226a and related structures, which are differentiated from the first embodiment. In addition, parts not explained in the second embodiment will be replaced by the description of the first embodiment.

As described above, the first rotor segment 223 includes the outer diameter bridge 224.

In addition, the first magnet accommodating part 223a of the first rotor segment 223 is disposed adjacent to the outer circumference of the first rotor segment 223, and may be provided to be parallel to a tangent line defined at a point of contact on the outer circumference of the second rotor segment 226.

Referring to FIGS. 16 and 17, although not clearly shown, an example is shown in which the first magnet accommodating parts 223a in a form parallel to tangent lines at a plurality of points of contact of the first rotor segment 223 are arranged approximately in a circumferential direction with respect to each other.

The first magnet accommodating part 223a may be arranged in a regular polygonal shape as a whole. For example, referring to FIGS. 16 and 17, the first magnet accommodating part 223a may be arranged in a regular hexagonal shape as a whole.

The outer diameter bridges 224 may be provided on both sides of the first magnet accommodating part 223a.

The outer diameter bridge 224 may not have the same width in the radial direction. That is, the width may vary from one portion adjacent to the magnet 227 toward another portion.

A width on the one portion adjacent to the magnet 227 of the outer diameter bridge 224 and a width on the other portion may be the thicknesses in the tangential direction of the rotor on the one portion and the other portion, respectively.

As shown in FIG. 18, the outer diameter bridge 224 is provided to have a gradually decreasing width from a portion adjacent to the magnet 227 to another portion away from the magnet 227.

Due to this, during high-speed rotation of the rotor assembly 220, deformation and damage of the outer diameter bridge 224 area can be prevented to further secure reliability, and at the same time, leakage of magnetic flux can be suppressed to maintain motor efficiency.

The outer diameter bridge 224 may include an outer end support portion 224e-1 supporting the magnet 227 on a portion adjacent to the magnet 227. The outer end support portion 224e-1 may include a bent portion formed by bending an end portion of the magnet accommodating parts 223a and 226a to support an outer end of the magnet 227.

By the outer end support portion 224e-1, rigidity can be secured on one side of the magnet 227.

Also, the outer diameter bridge 224 may include an outer air gap forming portion 224e-2 on another portion away from the magnet 227.

As the outer air gap forming portion 224e-2 has a width smaller than the outer end support portion 224e-1, an inner gap of the outer air gap forming portion 224e-2 can become larger, and due to this, leakage flux can be further reduced.

Hereinafter, the second rotor segment 226 will be described.

Like the first embodiment as described above, the second rotor segment 226 does not include the outer diameter bridge 224.

That is, openings 226d are formed on both sides of the magnet 227.

By the opening 226d, a side portion of the magnet 227 is exposed on the outer side of the second rotor segment 226. In particular, as the opening 226d is formed, connection by an electrical steel sheet material can be suppressed, so that the leakage of magnetic flux generated from the magnet 227 can be prevented as much as possible.

For example, the opening 226d may be formed in a shape in which a portion where the outer circumference of the second rotor segment 226 and the second magnet accommodating part 226a are connected is cut away. That is, the opening 226d may be a cutout portion.

Unlike the first embodiment, as the second magnet accommodation part 226a is provided in a bar shape and filled with a bar-shaped magnet 227, an inner bridge 226f is not provided.

By the opening 226d, a side portion of the magnet 227 inserted into the second magnet accommodation part 226a is exposed on the outer side of the second rotor segment 226.

In particular, since a portion where the opening 226d is formed is not connected by an electrical steel plate material in a circumferential direction, leakage of magnetic flux generated from the magnet 227 can be prevented as much as possible.

As an example, the opening 226d may be formed in a shape in which a portion where an outer circumference of the second rotor segment 226 and the second magnet accommodation part 226a are connected is cut. That is, the opening 226d may be exemplified as a cutout portion.

The opening 226d may be defined between a circumferential cutout end portion 226e-1 provided on a circumferential end portion of the second rotor segment 226 forming the second magnet accommodation part 226a, and a radial cutout end portion 226e-2 provided on a radial end portion of the second rotor segment 226 forming the second magnet accommodation part 226a.

As an example, referring to FIG. 20, the second magnet accommodation parts 226a are shown on both sides of the opening 226d, and the circumferential cutout end portion 226e-1 is provided on an end portion of the outer end support portion 224e-1 of the right second magnet accommodation part 226a. An example in which the radial cutout end portion 226e-2 is provided on the radial end portion of the second rotor segment 226 between the two second magnet accommodation parts 226a is shown. The opening 226d is shown between the circumferential cutout end portion 226e-1 and the radial cutout end portion 226e-2.

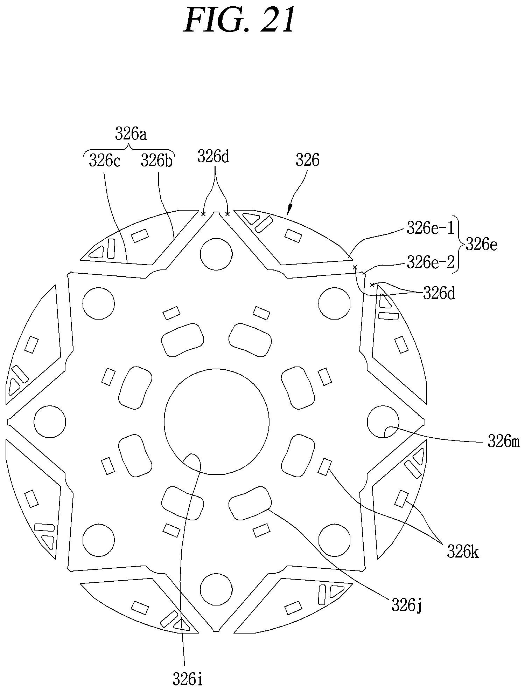

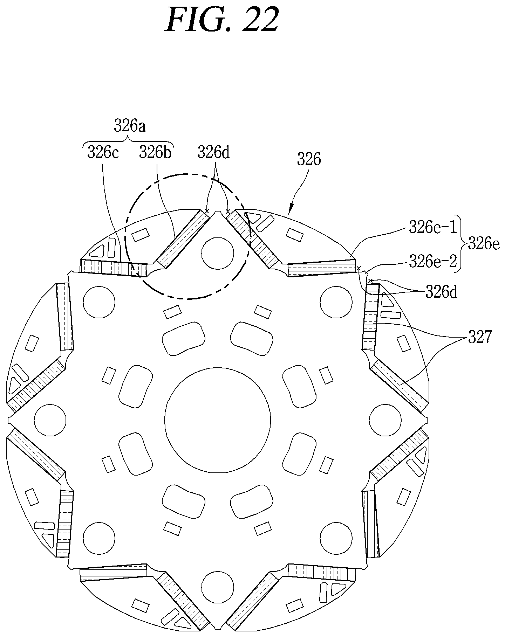

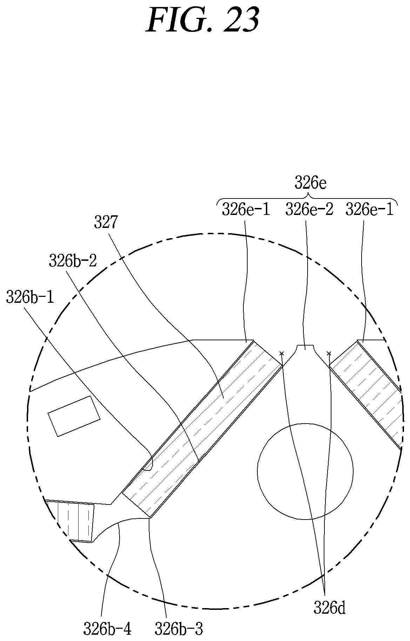

FIG. 21 is a plan view showing a second rotor segment 326, which is another embodiment according to the disclosure, and FIG. 22 is a plan view showing the second rotor segment 326 in which magnets 327 of FIG. 21 are installed. Also, FIG. 23 is an enlarged view of a portion of FIG. 22.

Hereinafter, the second rotor segment 326 of the rotor assembly 320 according to a third embodiment will be described with reference to FIGS. 21 to 23.

The second rotor segment 326 does not include an outer diameter bridge 324, as described in the first embodiment.

That is, an opening 326d is formed on the one side where the magnet 327 is disposed.

By the opening 326d, a side portion of the magnet 327 is exposed on the outer side of the second rotor segment 326. In particular, as the opening 326d is formed, connection by an electrical steel sheet material can be suppressed, so that the leakage of magnetic flux generated from the magnet 327 can be prevented as much as possible.

For example, the opening 326d may be formed in a shape in which a portion where an outer circumference of the second rotor segment 326 and the second magnet accommodating part 326a are connected is cut away. That is, the opening 326d may be a cutout portion.

Also, the second magnet accommodation part 326a of the second rotor segment 326 may include a third magnet arrangement part 326b and a fourth magnet arrangement part 326c disposed in directions crossing each other.

Unlike the first embodiment, an inner bridge is not provided between a pair of the third magnet arrangement part 326b and the fourth magnet arrangement part 326c of the second magnet accommodation part 326a. That is, the third magnet arrangement part 326b and the fourth magnet arrangement part 326c can form a structure communicating with each other.

The pair of the third magnet arrangement part 326b and the fourth magnet arrangement part 326c of the second magnet accommodating part 326a are arranged at a predetermined angle and may communicate with each other. For this purpose, a communication bent portion 326b-4 formed to be bent at a predetermined angle is provided between the third magnet arrangement part 326b and the fourth magnet arrangement part 326c of the second magnet accommodation part 326a.

That is, an inner bridge is not provided and an air gap is formed between the third magnet arrangement part 326b and the fourth magnet arrangement part 326c of each pair in the second magnet accommodation part 326a, that is, formed in the communication bent portion 326b-4.

Due to this, the leaking magnetic flux is reduced and the back-EMF can increase.

The third and fourth magnet arrangement parts 326b and 326c may include an inner support portion 323b-2 that is contacted and supported by a long side of the magnet 327 at an inner side, which is a center side of the second rotor segment 326, and an outer support portion 323b-1 that is contacted and supported by the long side of the magnet 327 at an outer circumferential side of the second rotor segment 326.

Meanwhile, referring to FIG. 23, the communication bent portion 326b-4 may include a bent support portion 326b-3, which is formed by bending at an inner end of the inner support portion 323b-2 to support the inner side of the magnet 327. In addition, the communication bent portion 326b-4 may include therein an inner end air gap between ends of the two magnets 327. By the inner end air gap, leakage of magnetic flux at the inner end of the magnet 327 can be prevented.

Since an inner bridge is not provided in the second magnet accommodation part 326a, supporting force may be weak.

To this end, the second rotor segment 326 may be provided with a coupling member for stacking and coupling the second rotor segments 326 to each other. Although the structure of the coupling member is not clearly shown in the drawings, one side is cut and protruded, and the protruded part is inserted into a cut part of another member to form a coupled structure. For example, the coupling member may be implemented as a Mac structure. A plurality of coupling members are provided and may be formed to be spaced apart from each other in the circumferential direction.

In the disclosure, by an alternately stacked structure of the first rotor segment 23, of which outer rigidity is reinforced by the outer diameter bridge 24, and the second rotor segment 26, which does not include the outer diameter bridge 24 so that leakage magnetic flux is reduced and back electromotive force is increased, performance can be secured according to the reduction of magnetic flux leakage while securing reliability according to the reinforcement of the outer rigidity.

The rotor assembly and the magnet-inserted motor including the same described above are not limited to the configurations and methods of the embodiments described above, but the embodiments may be configured by selectively combining all or part of each embodiment so that various modifications can be made.

It is obvious to those skilled in the art that the disclosure can be embodied in other specific forms without departing from the spirit and essential characteristics of the disclosure. Therefore, the detailed description of the disclosure should not be interpreted as restrictive in all respects and should be considered as exemplary. The scope of the disclosure should be determined by a reasonable interpretation of the appended claims, and all changes within the equivalent scope of the disclosure are included in the scope of the disclosure.

### Industrial Applicability

Since the disclosure can be applied to a rotor assembly and a magnet-inserted motor including the same, it is industrially applicable.

## Claims

1. A rotor assembly, comprising:
a rotor core comprising therein a plurality of magnet accommodating parts spaced apart along a circumferential direction; and
permanent magnets inserted into the magnet accommodating parts,
wherein the rotor core comprises:
a first rotor segment comprising a first magnet accommodating part; and
a second rotor segment stacked on the first rotor segment and comprising a second magnet accommodating part communicating with the first magnet accommodating part,
wherein an outer diameter bridge is provided on one side of the first magnet accommodating part in the circumferential direction so as not to be exposed toward an outer circumference of the rotor core,
wherein an opening is provided on one side of the second magnet accommodating part so as to be exposed toward the outer circumference of the rotor core,
wherein the first and second magnet accommodating parts are each formed as a plurality of pairs, and each pair is provided with two magnet arrangement parts formed to be bent at a predetermined angle,
wherein in each pair of the second magnet accommodating parts, an inner bridge is provided in a radial direction between the two magnet arrangement parts,
wherein each pair of the first magnet accommodating parts forms an air gap, without an inner bridge, between the two magnet arrangement parts, and
wherein the first and second rotor segments are each provided in plurality, and are alternately stacked on each other.

2. The rotor assembly according to claim 1,
wherein the one side of the first magnet accommodating part is defined between one pair of the first magnet accommodating parts and another adjacent pair of the first magnet accommodating parts, and
wherein the one side of the second magnet accommodating part is defined between one pair of the second magnet accommodating parts and another adjacent pair of the second magnet accommodating parts.

3. The rotor assembly according to claim 1,
wherein the magnet arrangement part of the second magnet accommodating part comprises:
a bent support portion formed by being bent to support an end portion of a magnet on one side where the inner bridge is connected; and
an inner gap portion provided to space the inner bridge from the end portion of the magnet.

4. The rotor assembly according to claim 1,
wherein the magnet arrangement part of the second magnet accommodating part comprises an inner support portion supported by a long side of the magnet at an inner side which is a center side of the second rotor segment, and an outer support portion supported by the long side of the magnet at an outer circumferential side of the second rotor segment.

5. The rotor assembly according to claim 1,
wherein the inner bridge is formed such that both side portions bent toward the magnet arrangement part of the second magnet accommodating part are rounded.

6. The rotor assembly according to claim 1,
wherein the opening is defined between a circumferential cutout end portion provided on a circumferential end portion of the second rotor segment forming the second magnet accommodating part, and a radial cutout end portion provided on a radial end portion of the second rotor segment forming the second magnet accommodating part.

7. The rotor assembly according to claim 1,
wherein the outer diameter bridge has a width in the radial direction that varies from one portion of the outer diameter bridge adjacent to the magnet to another portion.

8. The rotor assembly according to claim 1,
wherein the outer diameter bridge comprises an outer end support portion having a bent portion formed by bending an end portion of the first magnet accommodating part to support one side of the magnet.

9. The rotor assembly according to claim 8,
wherein the outer diameter bridge further comprises an outer air gap forming portion connected to the outer end support portion and spaced apart from the end portion of the magnet to be able to form an air gap with the end portion of the magnet.

10. The rotor assembly according to claim 9,
wherein the outer air gap forming portion has a smaller width than the outer end support portion.

11. The rotor assembly according to claim 10,
wherein a width G of the outer end support portion has a relationship with a width F of the outer air gap forming portion as shown in [Mathematical Formula 1] below: $G \geq F * 1.05$
where in [Mathematical Formula 1], G denotes the width of the outer end support portion, and F denotes the width of the outer air gap forming part.

12. A rotor assembly comprising:
a rotor core comprising therein a plurality of magnet accommodating parts spaced apart along a circumferential direction; and
permanent magnets inserted into the magnet accommodating parts,
wherein the rotor core comprises:
a first rotor segment comprising a first magnet accommodating part; and
a second rotor segment stacked on the first rotor segment and comprising a second magnet accommodating part communicating with the first magnet accommodating part,
wherein an outer diameter bridge is provided on one side of the first magnet accommodating part in the circumferential direction so as not to be exposed toward an outer circumference of the rotor core,
wherein an opening is provided on one side of the second magnet accommodating part so as to be exposed toward the outer circumference of the rotor core,
wherein the first and second magnet accommodating parts are each formed as a plurality of pairs, and each pair is provided with two magnet arrangement parts formed to be bent at a predetermined angle,
wherein each pair of the second magnet accommodating parts comprise a communication bent portion formed to be bent at a predetermined angle between the two magnet arrangement parts, and and allowing the two magnet arrangement parts to communicate with each other,
wherein each pair of the first magnet accommodating part forms an air gap, without an inner bridge, between the two magnet arrangement parts, and
wherein the first and second rotor segments are each provided in plurality, and are alternately stacked on each other.

13. The rotor assembly according to claim 1,
wherein a total height of the first rotor segment is 10% to 30% of a total height of the entire rotor core, and
wherein a total height of the second rotor segment is 70% to 90% of the total height of the entire rotor core.

14. The rotor assembly according to claim 1,
wherein the first rotor segment is provided in six stages in a spaced manner, and the second rotor segment is provided in five stages between the first rotor segments, and
wherein the first rotor segments are disposed on upper end and lower end of the rotor core.

15. The rotor assembly according to claim 1,
wherein the first rotor segments is greater in number than the second rotor segments, and
wherein the first rotor segments are disposed on upper end and lower end of the rotor core.

16. The rotor assembly according to claim 1,
wherein the first rotor segment is provided in six stages in a spaced manner, and the second rotor segment is provided in five stages between the first rotor segments;
the first rotor segment is provided in three stages in a spaced manner, and the second rotor segment is provided in two stages between the first rotor segments; or
the first rotor segment is provided in five stages in a spaced manner, and the second rotor segment is provided in four stages between the first rotor segments.

17. A magnet-inserted motor, comprising:
a stator;
the rotor assembly according to any one of claims 1 to 16, which is rotatably provided inside the stator; and
a rotating shaft inserted into the rotor core,
wherein in the rotor assembly, outer circumferential surfaces of the first and second rotor segments are disposed to face each other inside the stator so as to form an air gap.

18. The magnet-inserted motor according to claim 17,
wherein the stator comprises:
a stator core comprising teeth extending in a radial direction; and
a stator coil wound around the teeth,
wherein in the rotor assembly, the outer circumferential surfaces of the first and second rotor segments are disposed to face each other inside the teeth so as to form an air gap.
